# EUROPEAN PATENT APPLICATION

(11) **EP 4 322 029 A1**
(43) Date of publication of application: **14.02.2024**
(21) Application number: 22794706.6
(22) Date of filing: 20.04.2022
(51) Int. Cl.: G06F 16/783, G06K 9/00, G10L 15/00, G06F 40/00

(54) **METHOD AND APPARATUS FOR GENERATING VIDEO CORPUS, AND RELATED DEVICE**

(30) Priority: 29.04.2021 CN 202110471260; 06.08.2021 CN 202110905684
(71) Applicant: Huawei Cloud Computing Technologies Co., Ltd., Guizhou 550025 (CN)
(72) Inventor: LI, Taisong, Shenzhen, Guangdong 518129 (CN); LI, Minglei, Shenzhen, Guangdong 518129 (CN); WU, Yiling, Shenzhen, Guangdong 518129 (CN)
(74) Representative: Thun, Clemens
(86) International application number: PCT/CN2022/087908
(87) International publication number: WO 2022/228235

(57) **Abstract**

A method for generating a video corpus is provided, and specifically includes: obtaining a video to be processed, where the video to be processed corresponds to voice content, and some video images of the video to be processed include a subtitle corresponding to the voice content; and obtaining, based on the voice content, a target video clip from the video to be processed, and using a subtitle included in a video image in the target video clip as an annotation text of the target video clip, to obtain a video corpus. In this way, the video corpus can be automatically generated. Impact on segmentation precision caused by a subjective cognitive error in a manual annotation process can be avoided. Further, efficiency of generating the video corpus is generally high. In addition, a problem that voice content is not fully played in a generated video corpus can be avoided, and accuracy of an annotation text of the video corpus is higher. In addition, a video corpus generation apparatus and a related device are further provided.

## Description

### TECHNICAL FIELD

This application relates to the field of video processing technologies, and in particular, to a method and an apparatus for generating a video corpus, and a related device.

### BACKGROUND

A video is a common media category, and contributes to many applications in artificial intelligence scenarios such as emotion analysis and speaker detection. Specifically, supervised learning may be performed based on a large quantity of video corpuses with text annotations by using a machine learning algorithm, to meet requirements in a plurality of application scenarios.

Currently, a video corpus is usually generated by an annotator by watching an entire video and manually selecting start and end points of each video clip that needs to be annotated in a watching process. Therefore, a device segments the video based on the manually selected start and end points, and then performs text annotation on content of each video clip obtained through segmentation, to obtain at least one video corpus. In this manner of generating a video corpus through manual annotation, high labor costs are consumed. In addition, a subjective cognitive error of the annotator usually causes low segmentation accuracy of a video clip, and quality of a generated video corpus is low.

### SUMMARY

This application provides a method for generating a video corpus, to improve efficiency of generating a video corpus and improve quality of a generated video corpus. In addition, this application further provides a video corpus generation apparatus, a computer device, a computer-readable storage medium, and a computer program product.

According to a first aspect, this application provides a method for generating a video corpus, and the method is applied to a video corpus generation apparatus. Specifically, the video corpus generation apparatus obtains a video to be processed, where the video to be processed corresponds to voice content, that is, audio in the video to be processed includes word content in a human voice, and some video images of the video to be processed include a subtitle corresponding to the voice content. Then, the video corpus generation apparatus obtains based on the voice content, a target video clip from the video to be processed, and uses a subtitle included in a video image in the target video clip as an annotation text of the target video clip, to generate a video corpus that includes a video image, audio, and an annotation text.

In this way, in a process of generating a video corpus, the video corpus generation apparatus can automatically segment, based on the voice content corresponding to the video to be processed, the video to be processed, and automatically annotate the text for the video by using the subtitle in the video image. Therefore, impact on segmentation precision caused by a subjective cognitive error in a manual annotation process can be avoided. Further, efficiency of generating the video corpus is generally high.

In addition, when the subtitle is inconsistent with the audio in the video to be processed (for example, the subtitle is ahead or the voice is ahead), the video to be processed is segmented based on the voice content corresponding to the video to be processed. In this way, a problem that the voice content is not fully played in the target video clip obtained through segmentation can be avoided, thereby improving quality of the generated video corpus. Further, the subtitle in the target video clip is used as the annotation text of the target video clip, and the subtitle is usually an accurate text that is manually added by a video editor in advance based on the video voice. Compared with a manner in which the text obtained by performing speech recognition on the voice content is used as the annotation text of the target video clip, accuracy of the annotation text of the video corpus is higher.

In a possible implementation, when obtaining the target video clip from the video to be processed, the video corpus generation apparatus may specifically first recognize target voice start and end points of the voice content. For example, the target voice start and end points may be recognized by using an ASR technology. The target voice start and end points include a target voice start point and a target voice end point corresponding to the target voice start point. For example, the target voice start point may be, for example, a start point of a sentence of voice in the audio of the video to be processed, and the target voice end point is an end point of the sentence of voice in the audio. Then, the video corpus generation apparatus may obtain, based on the target voice start and end points, a target video clip from the video to be processed. For example, the video corpus generation apparatus may segment, based on the target voice start and end points, the video to be processed, to obtain a target video clip. In this way, the video to be processed is segmented based on the target voice start and end points. Therefore, a problem that the voice content is not fully played in the video clip obtained through segmentation can be avoided, thereby improving quality of the generated video corpus.

In a possible implementation, when obtaining, based on the target voice start and end points, the target video clip from the video to be processed, the video corpus generation apparatus may specifically first recognize the target subtitle start and end points of the subtitles corresponding to the voice content. For example, the target subtitle start and end points may be recognized by using an OCR technology. The target subtitle start and end points include a target subtitle start point and a target subtitle end point. Then, the video corpus generation apparatus may obtain, based on the target subtitle start and end points, a candidate video clip from the video to be processed. In addition, when the target voice start and end points are inconsistent with the target subtitle start and end points, the video corpus generation apparatus may adjust the candidate video clip based on the target voice start and end points, to obtain a target video clip. In this way, alignment between the subtitle and the voice content in the target video clip can be implemented, and a problem that voice content corresponding to a subtitle is incomplete in the target video clip obtained through segmentation can be avoided. In addition, the video to be processed is first segmented based on the target subtitle start and end points, which may prevent the target video clip from being too fragmented, for example, prevent a plurality of consecutive frames of video images with the same subtitle from being segmented into a plurality of video clips, and the like.

In a possible implementation, when recognizing target subtitle start and end points of the subtitle corresponding to the voice content, the video corpus generation apparatus may specifically determine the target subtitle start and end points based on a subtitle display region of the subtitle in the video to be processed. For example, the video corpus generation apparatus may sample a plurality of frames of video images in the video to be processed to obtain a sampled video image. Then the video corpus generation apparatus may determine, based on a display region of the subtitle on the sampled video image, the subtitle display region in the video to be processed. In this way, the subtitle display region of the video to be processed may be determined through an automatic sampling and recognition process, so that the subtitle start and end points are subsequently determined based on the subtitle in the subtitle display region.

In a possible implementation, after the video corpus is generated, the speech recognition model may be trained by using audio and an annotation text in the video corpus. In this way, for a voice whose text information is unknown, text information corresponding to the voice may be determined by using a speech recognition model obtained through training. For example, for a voice with a regional accent, a text corresponding to the voice may be accurately recognized by using the speech recognition model. Alternatively, after the video corpus is generated, the speech generation model may be trained by using audio and an annotation text in the video corpus. In this way, for a specific text, a corresponding voice may be output by using a speech generation model and based on the text. In addition, because quality of the generated video corpus is high, accuracy of a result output by the speech recognition model or the speech generation model, generated based on the video corpus with high quality, is generally high.

In a possible implementation, the annotation text of the generated video corpus may include texts in a plurality of languages. In an example that a text in a first language (for example, Chinese) and a text in a second language (for example, English) are included, a machine translation model may be trained by using the text in the first language and the text in the second language. In this way, the machine translation model may be subsequently used to translate a text to be processed in the first language (or the second language) entered by a user, to obtain a corresponding translated text in the second language (or the first language). In addition, because quality of the generated video corpus is high, accuracy of a translated result output by the speech recognition model or the speech generation model, generated based on the video corpus with high quality, is generally high.

In a possible implementation, after the video corpus is generated, facial information in a video image of the video corpus may be obtained, and a digital virtual human is generated based on the facial information, the audio included in the video corpus, and the annotation text of the video corpus. In this way, when the digital virtual human has a conversation with the user, if content of the conversation is the same as the semantics of the annotation text, a facial expression and audio of the conversation between the digital virtual human and the user may be fitted based on the facial information in the video image of the video corpus, thereby implementing more intelligent human-computer interaction.

In a possible implementation, the video corpus generation apparatus may further present a task configuration interface to the user, and the task configuration interface may present prompt information prompting the user to specify a training task. In this way, the video corpus generation apparatus may obtain a training task that is of the user and that is for the video corpus on the task configuration interface, so as to train, based on the generated video corpus, a model that belongs to the training task.

According to a second aspect, this application provides a video corpus generation apparatus, where the video corpus generation apparatus includes modules configured to implement the method for generating a video corpus in the first aspect.

According to a third aspect, this application provides a computer device. The computer device includes a processor and a memory. The memory is configured to store instructions. When the computer device runs, the processor executes the instructions stored in the memory, so that the computer device performs the method for generating a video corpus in any one of the first aspect or the possible implementations of the first aspect. It should be noted that the memory may be integrated into the processor, or may be independent of the processor. The computer device may further include a bus. The processor is connected to the memory over the bus. The memory may include a readable memory and a random access memory.

According to a fourth aspect, this application provides a computer-readable storage medium, where the computer-readable storage medium stores instructions, and when the instructions are run on a computer device, the computer device is enabled to perform the method for generating a video corpus according to any one of the first aspect or the implementations of the first aspect.

According to a fifth aspect, this application provides a computer program product including instructions. When the computer program product is run on a computer device, the computer device is enabled to perform the method for generating a video corpus according to the first aspect.

Based on the implementations provided in the foregoing aspects, this application may be further combined to provide more implementations.

### BRIEF DESCRIPTION OF DRAWINGS

FIG. 1 is a schematic diagram of an architecture of a system for generating a video corpus;
FIG. 2 is a schematic flowchart of a method for generating a video corpus according to an embodiment of this application;
FIG. 3 is a schematic diagram of voice content included in an example audio according to an embodiment of this application;
FIG. 4 is a schematic diagram of a video clip obtained by segmenting a video to be processed according to an embodiment of this application;
FIG. 5 is a schematic diagram of a task configuration interface according to an embodiment of this application;
FIG. 6 is a schematic diagram of a video corpus generation apparatus according to an embodiment of this application; and
FIG. 7 is a schematic diagram of a structure of a computer device 700 according to an embodiment of this application.

### DESCRIPTION OF EMBODIMENTS

In the specification, claims, and the accompanying drawings of this application, the terms "first", "second", and so on are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

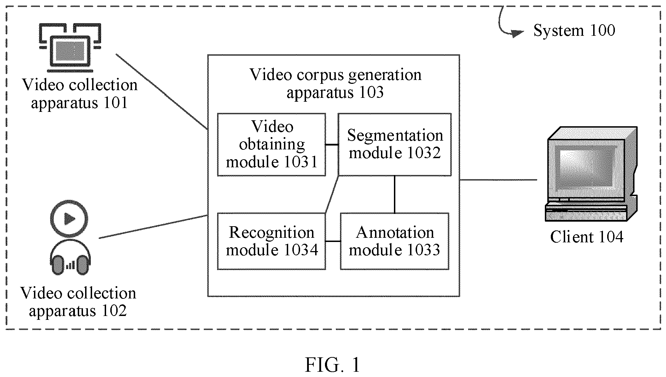

Refer to FIG. 1. FIG. 1 is a schematic diagram of an architecture of a system for generating a video corpus. As shown in FIG. 1, the system 100 includes a video collection apparatus 101, a video collection apparatus 102, a video corpus generation apparatus 103, and a client 104. Different apparatuses may be connected over a communication network. The video collection apparatus 101 may collect an existing video, such as a movie, from a network. The video collection apparatus 102 may collect a video on site, for example, collect a live video on site by using an apparatus such as a camera or a microphone. The video collection apparatus 101 and the video collection apparatus 102 may send videos collected in different ways to the video corpus generation apparatus 103. In this case, if an annotator manually annotates, through the client 104, a video transmitted to the video corpus generation apparatus 103, efficiency of generating a video corpus is low, and a subjective cognitive error of the annotator usually causes inaccurate video segmentation, thereby affecting quality of the generated video corpus.

Therefore, in this embodiment, the video corpus generation apparatus 103 may automatically segment the video and annotate a text. In a specific implementation, the video corpus generation apparatus 103 may include a video obtaining module 1031, a segmentation module 1032, an annotation module 1033, and a recognition module 1034. The video obtaining module 1031 may receive a video transmitted by the video collection apparatus 101 by using the video collection apparatus 102, and provide the video to the segmentation module 1032. The segmentation module 1032 obtains a target video clip from the video based on voice content corresponding to the video. Then, the annotation module 1033 uses a subtitle included in a video image in the target video clip as an annotation text of the target video clip, to obtain a video corpus including an annotation text, audio, and an image. The subtitle in the video image may be obtained by the recognition module 1034 by recognizing the video image. In this way, in a process of generating a video corpus, the video corpus generation apparatus 103 can automatically segment the video based on the voice content corresponding to the video, and automatically annotate the text for the video by using the subtitle in the video image. Therefore, impact on segmentation precision caused by a subjective cognitive error in a manual annotation process can be avoided. Further, efficiency of generating the video corpus is generally high.

In addition, when the subtitle is inconsistent with the audio in the video (for example, the subtitle is ahead or the voice is ahead), the video to be processed is segmented based on the voice content corresponding to the video. In this way, a problem that the voice content is not fully played in the video clip obtained through segmentation can be avoided, thereby improving quality of the generated video corpus. Further, the subtitle in the video clip is used as the annotation text of the video clip, and the subtitle is usually an accurate text that is manually added by a video editor in advance based on the video voice. Compared with a manner in which the text obtained by performing speech recognition on the voice content is used as the annotation text of the video clip, accuracy of the annotation text of the video corpus is higher.

For example, the video corpus generation apparatus 103 may be implemented by software, for example, may be a computer program, and the like, running on any device (for example, a server) in the system 100. Alternatively, the video corpus generation apparatus 103 may be implemented by hardware. For example, the video corpus generation apparatus 103 may be a server or a terminal device in the system 100. Alternatively, the video corpus generation apparatus 103 may be a device implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof.

In actual application, the video corpus generation apparatus 103 shown in FIG. 1 may be deployed on a cloud, for example, may be deployed on a public cloud, an edge cloud, or a distributed cloud. In this case, the video corpus generation apparatus 103 may be used as a cloud service, and generate, on the cloud, a video corpus required by one or more users. Alternatively, the video corpus generation apparatus 103 may be deployed locally, for example, may collect a video locally and generate a video corpus locally. In this embodiment, a specific deployment manner of the video corpus generation apparatus 103 is not limited.

It should be noted that the video corpus generation apparatus 103 shown in FIG. 1 is merely used as an example for description, and is not intended to limit specific implementations of the apparatus. For example, in another possible implementation, the segmentation module 1032 and the recognition module 1034 may be integrated into one functional module. For example, the segmentation module 1032 may have segmentation and recognition functions, or the like. Alternatively, the video corpus generation apparatus 103 may include another functional module to support the video corpus generation apparatus in having more other functions. Alternatively, the video corpus generation apparatus 103 may obtain video data in another manner. For example, a user provides a video for the video corpus generation apparatus 103.

For ease of understanding, the following describes embodiments of this application with reference to the accompanying drawings.

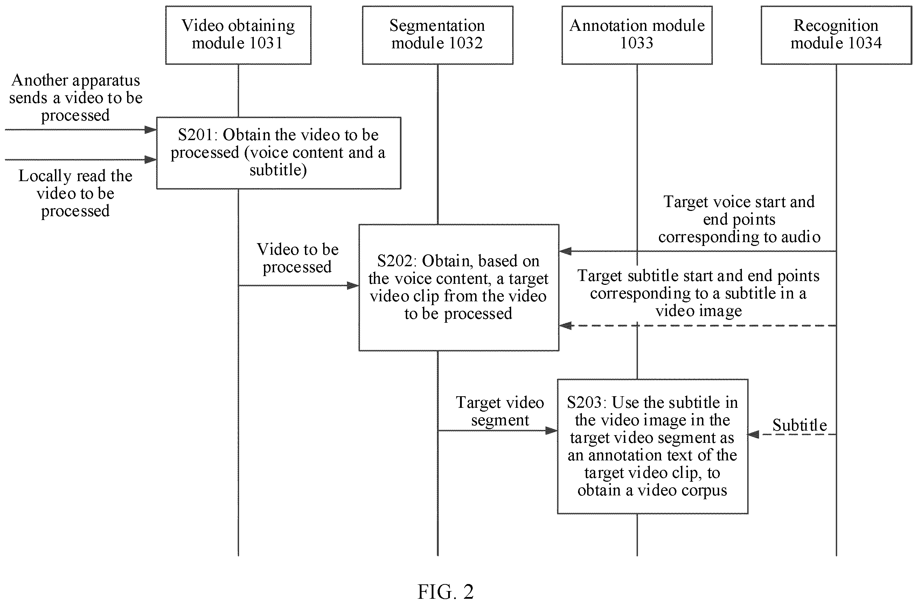

Refer to FIG. 2. FIG. 2 is a schematic flowchart of a method for generating a video corpus according to an embodiment of this application. The method for generating a video corpus shown in FIG. 2 may be applied to the video corpus generation apparatus 103 shown in FIG. 1, or may be applied to another applicable video corpus generation apparatus. For ease of description, in this embodiment, an example in which the method is applied to the video corpus generation apparatus 103 shown in FIG. 1 is used for description.

Based on the video corpus generation apparatus 103 shown in FIG. 1, the method for generating a video corpus shown in FIG. 2 may specifically include the following steps.

S201: A video obtaining module 1031 obtains a video to be processed, where the video to be processed corresponds to voice content, and some video images of the video to be processed include a subtitle corresponding to the voice content.

In this embodiment, the obtained video may be a video including a plurality of consecutive frames of video images and audio, and the plurality of consecutive frames of video images include subtitles. For ease of description, the obtained video is referred to as the video to be processed below. In a scenario of actual application, the subtitles in the video to be processed may be corresponding subtitles edited and added by a video editor for the video based on voice content included in audio of the video to be processed in a process of generating the video. After the video is rendered, the added subtitles may be integrated into the plurality of frames of video images of the video.

The voice content in the audio may be specifically word content in a human voice sent by a role in the video to be processed. For example, the voice content may be content of a conversation between a person A and a person B in the video to be processed. Alternatively, the voice content may be introductory content expressed by "voiceover" in the video to be processed. Generally, semantics expressed by the voice content in the audio are consistent with semantics of subtitles in the video. In addition, in the audio of the video to be processed, in addition to the voice content, an audio segment that does not include voice content further exists. For example, in a video of a conversation between persons, audio included in video clips before and after the conversation may be audio that does not include voice content (in this case, a video image of the video clip may not include subtitles of the conversation).

In an implementation example of obtaining a video to be processed, the video obtaining module 1031 may receive the video to be processed sent by another apparatus. For example, the video obtaining module 1031 may establish a communication connection to the video collection apparatus 101 and the video collection apparatus 102 in FIG. 1, and receive the video to be processed that is sent by the video collection apparatus 101 and the video collection apparatus 102 based on the communication connection. Alternatively, the video obtaining module 1031 may locally read the video to be processed or the like. In this embodiment, a specific implementation of obtaining the video to be processed is not limited. Then, the video obtaining module 301 may provide the video to be processed to the segmentation module 1032 for subsequent processing.

In actual application, the video to be processed obtained by the video obtaining module 1031 may be, for example, a video whose playback duration is greater than a preset duration threshold. Therefore, a plurality of video corpuses may be subsequently generated based on the video to be processed.

S202: The segmentation module 1032 obtains, based on the voice content, a target video clip from the video to be processed.

In some scenarios, the audio in the video to be processed may include more voice content (for example, may include a plurality of sentences of voice content), and an audio segment that does not include voice content exists in the audio. Therefore, the segmentation module 1032 may segment the video to be processed. Specifically, the segmentation module 1032 may segment, based on the voice content, the video to be processed, to obtain a plurality of video clips, where the obtained audio of each video clip includes some voice content. Correspondingly, a subtitle corresponding to the voice content included in each video clip is integrated into a video image included in the video clip. Certainly, if the audio in the video to be processed includes less voice content, for example, includes only one sentence of voice content, the segmentation module 1032 may also segment the audio based on the voice content of the audio to obtain a video clip. For ease of description, an example in which a video corpus is generated based on a video clip obtained through segmentation is used below for description. In addition, the video clip is referred to as the target video clip below.

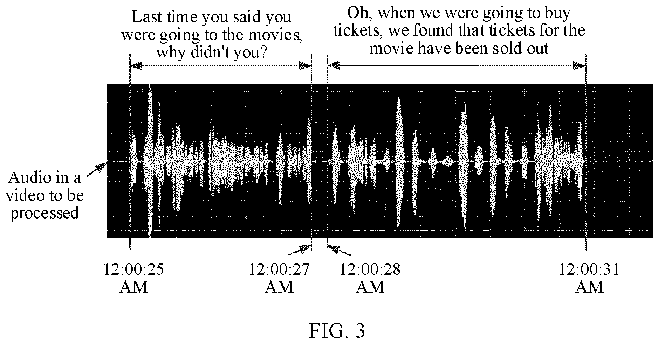

In an implementation example, in a process of segmenting the video to be processed, the segmentation module 1032 may invoke the recognition module 1034 to obtain voice start and end points corresponding to the audio included in the video to be processed. Specifically, the recognition module 1034 may recognize each sentence in the audio, for example, perform recognition by using an automatic speech recognition (automatic speech recognition, ASR) algorithm. An end of each sentence of voice is an end point of the sentence of voice, and a start of the sentence of voice is a start point of the sentence of voice. In addition, an interval may exist between two adjacent sentences. A start point and an end point of a sentence of voice may be recognized by using a timestamp in the audio. In actual application, the recognition module 1034 may improve precision of determining voice start and end points with reference to a voice activity detection (voice activity detection, VAD) technology. For example, it is assumed that voice content in the audio includes "Last time you said you were going to the movies, why didn't you?" and "Oh, when we were going to buy tickets, we found that tickets for the movie have been sold out" shown in FIG. 3. The recognition module 1034 may recognize, based on the ASR algorithm, that a start moment of the first sentence of voice " Last time you said you were going to the movies, why didn't you?" is "00:00:25" and an end moment is "00:00:27". The recognition module 1034 may recognize that a start moment of the second sentence of voice "Oh, when we were going to buy tickets, we found that tickets for the movie have been sold out" is "00:00:28" and an end moment is "00:00:31". Therefore, the recognition module 1034 may use "00:00:25" and "00:00:27" as a start point and an end point of the first sentence of voice respectively, and use "00:00:28" and "00:00:31" as a start point and an end point of the second sentence of voice respectively.

Then, the recognition module 1034 may provide, for the segmentation module 1032, a plurality of voice start and end points of the voice content included in the video to be processed that are obtained through recognition by using the ASR algorithm. In this way, the segmentation module 1032 may segment the video to be processed into a plurality of video clips based on the plurality of voice start and end points. To be specific, when a target video clip (the target video clip is any video clip in the plurality of video clips) is obtained from the video to be processed, the recognition module 1034 may first recognize target voice start and end points, where the target voice start and end points include a target voice start point and a target voice end point corresponding to the target voice start point. Therefore, the segmentation module 1032 obtains the target video clip from the video to be processed through segmentation based on the target voice start and end points. The start point and the end point of the target video clip are the target voice start point and the target voice end point that are corresponding to the voice content in the video clip.

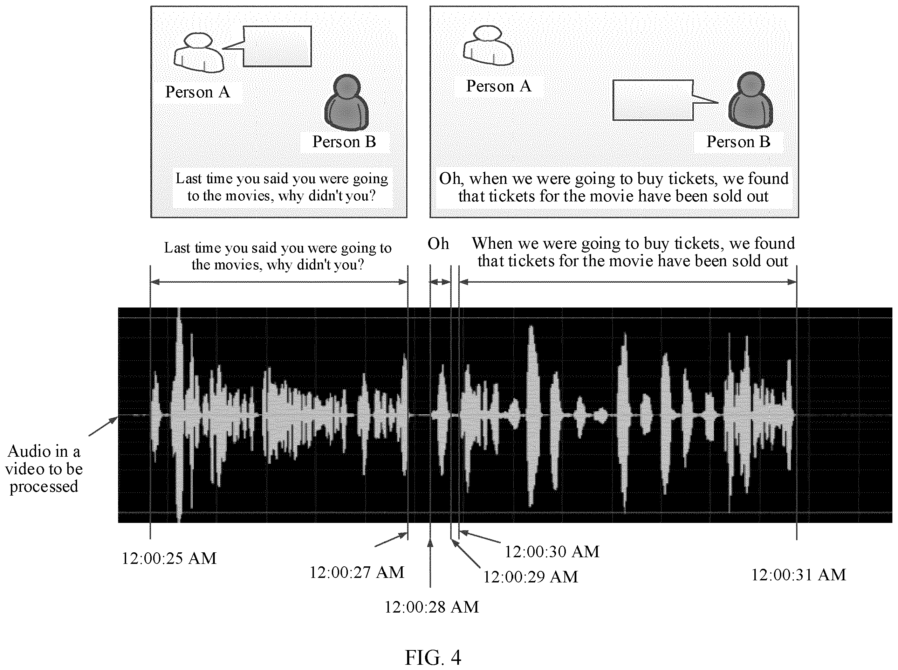

In actual application, if the video to be processed is segmented based on the start and end points of the voice in the audio, a plurality of frames of video images with the same subtitle may be segmented into two video clips. For example, the audio shown in FIG. 3 is still used as an example. As shown in FIG. 4, for a video clip from a moment "00:00:28" to a moment "00:00:31", a subtitle of the video clip is "Oh, when we were going to buy tickets, we found that tickets for the movie have been sold out". However, when the ASR algorithm is used to recognize the voice start and end points of the voice content in the audio, alternatively, the voice content "Oh, when we were going to buy tickets, we found that tickets for the movie have been sold out" may be recognized as two sentences of voice, for example, a voice between a moment "00:00:28" and a moment "00:00:29" and a voice between a moment "00:00:30" and a moment "00:00:31" shown in FIG. 4. Therefore, when the video to be processed is segmented based on the voice start and end points, two video clips with voice content "Oh" and voice content "When we were going to buy tickets, we found that tickets for the movie have been sold out" may be obtained through segmentation. The two video clips both have the same subtitle "Oh, when we were going to buy tickets, we found that tickets for the movie have been sold out".

Therefore, in a further possible implementation, when obtaining the target video clip from the video to be processed, the segmentation module 1032 may segment the video to be processed with reference to subtitle start and end points and the voice start and end points of the voice content. Specifically, in a process of obtaining a target video clip from the video to be processed, the recognition module 1034 may not only recognize and obtain the target voice start and end points, but also recognize and obtain target subtitle start and end points of the subtitles corresponding to the voice content, where the target subtitle start and end points include a target subtitle start point and a target subtitle end point corresponding to the target subtitle start point. For example, the target subtitle start point may be specifically a time point at which the subtitle appears in the video to be processed. The target subtitle end point may be specifically a time point at which the subtitle ends in the video to be processed. In this way, the segmentation module 1032 may first segment, based on the target subtitle start and end points, the video to be processed, to obtain a candidate video clip. Then, the segmentation module 1032 may perform consistency check on the target subtitle start and end points by using the target voice start and end points. When the target voice start and end points are consistent with the target subtitle start and end points, the segmentation module 1032 may use the candidate video clip as the target video clip finally obtained through segmentation. Alternatively, when the target voice start and end points are inconsistent with the target subtitle start and end points, the segmentation module 1032 may adjust the candidate video clip based on the target voice start and end points to obtain the final target video clip.

That the target voice start and end points are inconsistent with the target subtitle start and end points may include the following situations.

Situation 1: The target voice start and end points include one or more groups of target subtitle start and end points. As shown in FIG. 4, the target voice start and end points include "00:00:28", "00:00:29", "00:00:30", and "00:00:31", and the target subtitle start and end points may include "00:00:28" and "00:00:31". In this case, the segmentation module 1032 may use the candidate video clip (that is, a video clip from "00:00:28" to "00:00:31") as the target video clip finally obtained through segmentation.

Situation 2: The target voice start and end points are not aligned with the target subtitle start and end points, for example, the voice is ahead or the subtitle is ahead. In this case, the segmentation module 1032 may first segment, based on the target subtitle start and end points, the video to be processed, to obtain a candidate video clip. Then the segmentation module 1032 may adjust, based on the target voice start and end points, the candidate video clip obtained through segmentation, to obtain a required target video clip. In this way, a problem that voice content corresponding to a subtitle is incomplete in the target video clip obtained through segmentation can be avoided.

When the voice is ahead, that is, a moment corresponding to the target voice start point is earlier than a moment corresponding to the target subtitle start point, voice content in audio of the candidate video clip obtained through segmentation based on the target subtitle start and end points corresponds to some subtitles in the candidate video clip. To be specific, some voice content in the audio of the candidate video clip is missing. Therefore, if the candidate video clip is used as the target video clip, voice content in the finally generated video corpus is incomplete, consequently, quality of the video corpus is affected. Based on this, for the candidate video clip, the segmentation module 1032 may further determine, based on the target voice start point (or the target voice end point), duration ahead by the target voice start point relative to the target subtitle start point (or duration ahead by the target voice end point relative to the target subtitle end point). In addition, because a video image that does not have a subtitle may generally exist between two adjacent subtitles in the video to be processed, the segmentation module 1032 may select, based on the duration ahead, a plurality of consecutive frames of video images that do not have a subtitle before the candidate video clip, and segment video clips corresponding to the plurality of frames of video images into the candidate video clip, where playback duration of the selected video image is the duration ahead. In this way, a start point of the candidate video clip may be moved forward, so that an obtained new candidate video clip includes a video clip corresponding to the plurality of consecutive frames of video images selected and a candidate video clip obtained through segmentation previously. The new candidate video clip is used as a target video clip obtained through final segmentation. Specifically, a start point of the new candidate video clip is a target voice start point corresponding to the audio in the candidate video clip, and an end point of the new candidate video clip is a target subtitle end point corresponding to the subtitle in the candidate video clip.

For example, it is assumed that the video to be processed is segmented based on the target subtitle start and end points. A candidate video clip with a subtitle "Oh, when we were going to buy tickets, we found that tickets for the movie have been sold out" shown in FIG. 3 may be obtained, where a corresponding start point is "00:00:28" and an end point is "00:00:31". If audio corresponding to the subtitle in the candidate video clip is 0.5 second ahead, the segmentation module 1032 may move the start point of the candidate video clip forward by 0.5 second, to obtain a new candidate video clip whose start point is "00:00:27.50" and whose end point is "00:00:31". In this way, voice content in the audio of the new candidate video clip is consistent with the subtitle.

When the voice lags, that is, the moment corresponding to the target voice start point is later than the moment corresponding to the target subtitle start point, in this case, for a candidate video clip obtained through segmentation based on the target subtitle start and end points, the segmentation module 1032 may re-determine the start point of the candidate video clip based on the target voice start point. For example, the target voice start point is used as the start point of the candidate video clip. In addition, when the target voice end point is not later than the target subtitle end point, the end point of the candidate video clip is still the target subtitle end point. However, when the target voice end point is later than the target subtitle end point, the segmentation module 1032 may re-determine the end point of the candidate video clip based on the target voice end point. For example, a voice lag duration may be first determined, so that a plurality of frames of video images may be continuously selected starting from the end point of the candidate video clip. A playback duration of the plurality of selected frames of video images is the voice lag duration, so a new candidate video clip is obtained. The new candidate video clip is used as a target video clip obtained through final slicing. A start point of the new candidate video clip is a target voice start point corresponding to the audio in the candidate video clip, and an end point of the new candidate video clip is a target voice end point corresponding to the audio. In this way, alignment between the subtitle and the voice content in the video clip can be implemented.

Still using an example in which the segmentation module 1032 obtains, through segmentation, a candidate video clip with a subtitle "Oh, when we were going to buy tickets, we found that tickets for the movie have been sold out" shown in FIG. 3. Assuming that the audio corresponding to the subtitle in the candidate video clip lags 0.5 second, the segmentation module 1032 may move the start point of the candidate video clip backward by 0.5 second. In this case, if the voice end point is not later than the subtitle end point, the start point of the new candidate video clip is "00:00:28.50" and the end point is "00:00:31". If the voice end point is later than the subtitle end point, assuming that the voice end point is "00:00:31.30", the start point of the new candidate video clip is "00:00:28.50" and the end point is "00:00:31.30".

In this embodiment, when recognizing the target subtitle start and end points, the recognition module 1034 may determine the target subtitle start and end points based on differences between video images. In a specific implementation, the recognition module 1034 may first determine a subtitle display region on the video image in the video to be processed. Generally, a display region (referred to as a subtitle display region) of the subtitle in the video to be processed on the video image is usually fixed, for example, located below the video image. Then, the recognition module 1034 may determine a plurality of subtitle start and end points of the video to be processed, by sequentially comparing a difference between subtitle display regions of two adjacent frames of video images in the plurality of frames of video images of the video to be processed. For example, for two adjacent frames of video images, the recognition module 1034 may capture subtitle display regions on the two frames of video images, and compare a difference between the two subtitle display regions. If the difference between the two subtitle display regions is small, for example, a degree of difference is less than a preset threshold, the recognition module 1034 may determine that subtitles displayed in the two frames of video images do not change. To be specific, the subtitles displayed in the two frames of video images are the same (it is also possible that neither of the two frames of video images has a subtitle, and whether the two frames of video images have a subtitle may be further determined through image detection). Alternatively, if the difference between the two subtitle display regions is large, for example, the degree of difference is greater than the preset threshold, the recognition module 1034 may determine that the subtitles displayed in the two frames of video images change. Correspondingly, one of the two frames of video images may be used as a corresponding subtitle start point or subtitle end point. Certainly, in actual application, the recognition module 1034 may alternatively determine, based on another manner, the subtitle start and end points of the video to be processed, which is not limited in this embodiment.

Further, when determining the subtitle display region on the video image, the recognition module 1034 may determine the subtitle display region in a manner of automatic detection. For example, the recognition module 1034 may randomly sample n frames of video images (n is a positive integer and a value is less than a total frame quantity of the video images) from a plurality of frames of videos included in the video to be processed, to obtain a sampled video image. Then, the recognition module 1034 may recognize subtitles in the n frames of sampled video images by using an optical character recognition (optical character recognition, OCR) technology, and collect statistics on an approximate region of the subtitles in each frame of sampled video images, to obtain a subtitle display region on the sampled video image. For example, the largest region obtained through statistics may be used as the subtitle display region. Further, when subtitle display regions in different frames of sampled video images are different, for example, for a movie video, a display position of a subtitle on the video image may be located below the video image, or may be located above the right of the video image. In this case, the recognition module 1034 may use both the two regions as subtitle display regions. Alternatively, the recognition module 1034 may collect statistics on a region that displays most subtitles in n frames of sampled video images, and use the region as the subtitle display region. In actual application, the recognition module 1034 may alternatively determine the subtitle display region in another manner, which is not limited in this embodiment.

Alternatively, in another implementation of recognizing the subtitle start and end points, the recognition module 1034 may also recognize the subtitle start and end points by sequentially comparing a difference between two adjacent frames of entire video images in the video to be processed. In this embodiment, the specific implementation process of how the recognition module 1034 recognizes the subtitle start and end points is not limited.

In actual application, the recognition precision of the recognition module 1034 for the target subtitle start and end points and the target voice start and end points may be affected by the video image and the audio content in the video to be processed respectively. For example, when the background color of the subtitle display region on the video image is similar to the subtitle color, it may be difficult for the recognition module 1034 to recognize the subtitle on the video image, and consequently, the recognition module 1034 cannot recognize the subtitle start and end points corresponding to the subtitle. For another example, when the audio content includes both a sound voice of a person and noise and the like, existence of the noise may result in a situation that the recognition module 1034 cannot recognize the sound voice of the person, and consequently, the recognition module 1034 cannot recognize voice start and end points corresponding to the sound voice of the person. Therefore, in this embodiment, when determining that an overlap rate between the voice start and end points and the subtitle start and end points reaches a preset overlap rate threshold (for example, 90%), the segmentation module 1032 may segment, based on the subtitle start and end points and the voice start and end points of the voice content, the video to be processed. Alternatively, when determining that an overlap rate between the voice start and end points and the subtitle start and end points reaches some threshold (for example, 90%), the segmentation module 1032 may segment the video to be processed only based on the voice start and end points of the voice content.

Further, the overlap rate threshold may be set by a user. For example, the video corpus generation apparatus 103 may present a parameter setting interface to the user, so that the user may set, in the parameter setting interface, the overlap rate threshold between the voice start and end points and the subtitle start and end points. In a scenario of actual application, the user may determine a specific value of the overlap rate threshold based on a video type to which the video to be processed belongs. For example, for a video to be processed of a music type, a music sound in audio included in the video to be processed usually interferes with voice content, thereby affecting accuracy of recognizing voice start and end points by the recognition module 1034. In this case, the user may reduce the value of the overlap rate threshold, for example, set the overlap rate threshold to 85%. However, for a video to be processed of a pure human voice type, there is usually a small amount of interference sound in audio included in the video to be processed, and there is little impact on accuracy of recognizing voice start and end points by the recognition module 1034. Therefore, the user may increase the value of the overlap rate threshold, for example, set the overlap rate threshold to 95%.

In addition, the process of obtaining a target video clip from the video to be processed may alternatively be accelerated through corresponding hardware. For example, a graphics processing unit (graphics processing unit, GPU) with high performance in image processing may be used for processing, or certainly, a CPU with low performance may be used for processing. Therefore, in some possible implementations, the video corpus generation apparatus 103 may present, on an interaction interface with the user, prompt information about whether to perform hardware acceleration. In this way, the user selects, on the interaction interface, whether to use the hardware acceleration to accelerate the process of obtaining a target video clip from the video to be processed, thereby accelerating the process of generating the video corpus.

S203: The annotation module 1033 uses a subtitle included in a video image in the target video clip as an annotation text of the target video clip, to obtain a video corpus.

After the segmentation module 1032 obtains a target video clip from the video to be processed, the annotation module 1033 may automatically add an annotation text for the target video clip. In this embodiment, the annotation text added by the annotation module 1033 for the target video clip is a subtitle displayed on the video image of the video clip. As an implementation example, when adding an annotation text for the target video clip, the annotation module 1033 may invoke the recognition module 1034 to recognize the subtitle on the video image in the target video clip. The recognition module 1034 may recognize the subtitle on the video image of the target video clip by using an OCR technology, to obtain a corresponding subtitle text, and feedback the subtitle text to the annotation module 1033. The annotation module 1033 may annotate the video clip by using the received subtitle text as annotation text, to generate a video corpus including annotation voice, audio, and a video image. Because the subtitle in the target video clip is manually added to the video by the video editor in advance based on the voice content in the process of producing the video, consistency between the subtitle and the voice content is high. Therefore, the annotation module 1033 uses the subtitle in the target video clip as the annotation text, thereby improving accuracy of the annotation text of the target video clip.

It should be noted that this embodiment is described by using an example in which the recognition module 1034 obtains a target video clip through segmentation and then recognizes the subtitle in the target video clip. In another possible implementation, the recognition module 1034 may first recognize the subtitle in the video to be processed to obtain a subtitle text of the entire video to be processed, where the subtitle text may record display time points corresponding to different subtitles. Then, the segmentation module 1032 segments the video to be processed. In this way, when the annotation module 1033 needs to obtain a subtitle text corresponding to the target video clip, the annotation module 1033 may search, based on a playback time period of the target video clip in the video to be processed, for the subtitle displayed in the playback time period through the subtitle text, to obtain the subtitle text corresponding to the target video clip. In this embodiment, an execution sequence that the recognition module 1034 recognizes the subtitle and the segmentation module 1032 segments the video to be processed is not limited.

In the foregoing implementation, the video corpus generation apparatus 103 generates a video corpus based on the video to be processed that includes the subtitle. In another possible implementation, when the video to be processed does not include a subtitle, the video corpus generation apparatus 103 may alternatively generate, based on the video to be processed, a video corpus with an annotation text. In an implementation example, after the video obtaining module 1031 obtains a video to be processed, the segmentation module 1032 may segment, based on voice content in audio included in the video to be processed, the video to be processed, to obtain one or more video clips with the voice content. For a specific implementation in which the segmentation module 1032 segments, based on the audio, the video to be processed, refer to the foregoing related description. Then, when adding an annotation text for each video clip, the annotation module 1033 may invoke the recognition module 1034 to perform speech recognition for audio in each video clip. In addition, the annotation module 1033 may determine each sentence in the voice content by using a sentence boundary detection technology, to obtain a speech recognition text corresponding to the voice content of each video clip. In this way, the annotation module 1033 may use the speech recognition text corresponding to each video clip as an annotation text for the video clip, to generate a video corpus.

Further, after generating a video corpus, the video corpus generation apparatus 103 may further present the video corpus to the user, so that the user performs manual verification on the video image, the audio, and the annotation text in the video corpus. In this way, when there is a small quantity of video corpuses with low quality in the generated video corpus, the user may manually correct the part of the video corpus, to further improve quality of the generated video corpus.

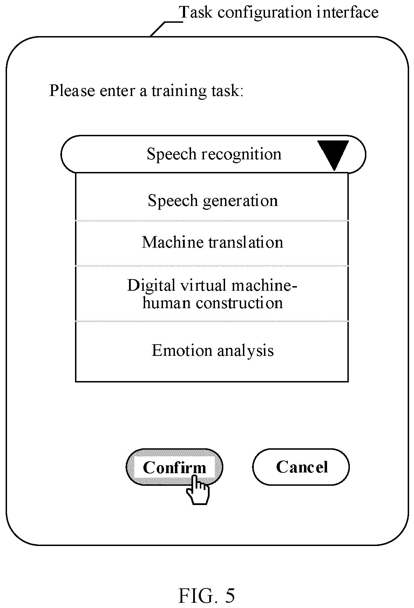

In actual application, the one or more video corpuses generated by the video corpus generation apparatus 103 based on the video to be processed may be used in scenarios such as speech recognition, speech generation, machine translation, digital virtual machine-human construction, and emotion analysis. For example, the video corpus generation apparatus 103 may present a task configuration interface to the user. The task configuration interface may prompt the user to enter a training task for the video corpus. As shown in FIG. 5, prompt information "Please enter a training task" may be presented on a task configuration. In addition, to facilitate the user to enter the training task, a plurality of candidate items of training tasks may be further presented on the task configuration interface, for example, training tasks such as speech recognition, speech generation, machine translation, digital virtual human-machine construction, and emotion analysis shown in FIG. 5. Therefore, the user may select the presented training tasks on the task configuration interface, so that the video corpus generation apparatus 103 can obtain a training task selected by the user, and execute the training task based on the generated video corpus. Alternatively, in another implementation, the user may directly manually enter a name of a training task on the task configuration interface. In this embodiment, an implementation in which the video corpus generation apparatus 103 obtains a training task specified by the user is not limited.

In an application example, in a scenario of speech recognition, a video corpus that is generated by the video corpus generation apparatus 103 and that carries an annotation text, audio, and a video image may be used to train a pre-constructed speech recognition model. During specific implementation, the audio in the video corpus may be used as an input of the speech recognition model, and the annotation text of the video corpus may be used as an output of the speech recognition model, to train the speech recognition model. Optionally, when the speech recognition model is used to recognize audio with a regional pronunciation (for example, a dialect that is usually referred to as), a video corpus with a regional accent may be generated by the video corpus generation apparatus 103. In other words, a voice included in the audio in the video corpus is a voice based on a regional pronunciation. Therefore, after the speech recognition model is trained by using the video corpus, the speech recognition model can recognize a corresponding voice text for the audio with the regional pronunciation or a video (such as a dialect drama or a local news video) including the audio, to implement speech recognition.

In still another application instance, a video corpus generated by the video corpus generation apparatus 103 in a scenario of speech generation may be used to train a pre-constructed speech generation model. Automatic speech generation may be understood as a reverse process of speech recognition. To be specific, a corresponding voice is generated based on a specific text. During specific implementation, the annotation text in the video corpus may be used as an input of the speech generation model, and the audio in the video corpus may be used as an output of the speech generation model, to train the speech generation model. In actual application, a speech generation model obtained through training may output, based on an input text, a voice corresponding to the text in a field such as an audio novel, a digital virtual human, a voice assistant, or an intelligent sound system. Optionally, when the speech generation model is trained, the speech generation model may be trained by using a video corpus including a voice of a specific character role. Therefore, a plurality of voices including those of the character role may be subsequently generated based on the speech generation model obtained through training. For example, a voice of a navigation route of the character role is generated by using the speech generation model.

In still another application instance, in a scenario of machine translation, the annotation text in the video corpus may include texts that are based on a plurality of languages and that have the same meaning (for example, subtitles in the video corpus are Chinese-English bilingual subtitles). For example, the annotation text includes a text in a first language and a text in a second language. In this case, texts of a plurality of languages may be separated from the annotation text of the video corpus. Because texts in the plurality of languages usually have the same semantics, the machine translation model may be trained by using the annotation text, to improve accuracy of obtaining a voice in another language by using the machine translation model based on translation of a voice in one language.

As yet another application instance, in a scenario of constructing a digital virtual human, a multi-modal speaker detection technology may be used to locate a character role of a voice from a video image of a video corpus. Facial information, such as a facial expression, a facial action, and the like, of the character role when speaking is detected from the video image. Therefore, a digital virtual human may be generated based on the facial information, audio included in the video corpus, and an annotation text. In this way, when the digital virtual human has a conversation with the user, if content of the conversation is the same as the semantics of the annotation text, a facial expression and audio of the conversation between the digital virtual human and the user may be fitted based on the facial information in the video image of the video corpus, thereby implementing more intelligent human-computer interaction.

Certainly, the foregoing scenario instances are merely used as some examples for description provided in this embodiment. In actual application, the video corpus may be further used in more other available scenarios, for example, multi-modal emotion analysis, multi-modal video classification, and the like, are performed based on the video corpus. This is not limited in this embodiment.

The foregoing describes in detail the method for generating a video corpus provided in embodiments of this application with reference to FIG. 1 to FIG. 5. The following describes, from a perspective of functional units, a video corpus generation apparatus provided in embodiments of this application with reference to the accompanying drawings.

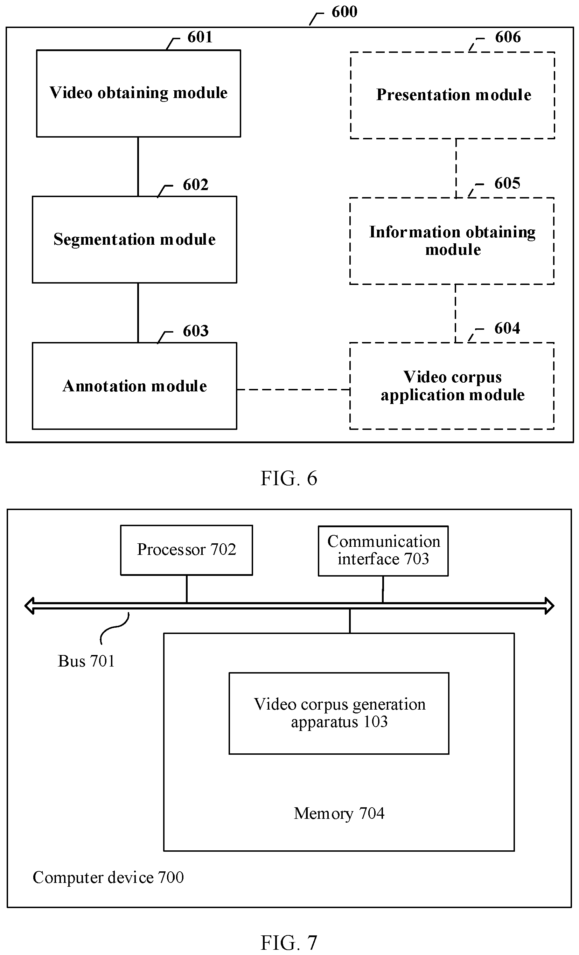

Referring to a schematic diagram of a structure of a video corpus generation apparatus shown in FIG. 6, an apparatus 600 includes:
a video obtaining module 601, configured to obtain a video to be processed, where the video to be processed corresponds to voice content, and some video images of the video to be processed include a subtitle corresponding to the voice content;
a segmentation module 602, configured to obtain, based on the voice content, a target video clip from the video to be processed; and
an annotation module 603, configured to use a subtitle included in a video image in the target video clip as an annotation text of the target video clip, to obtain a video corpus.

For example, a function performed by the video obtaining module 601 in this embodiment is similar to a function performed by the video obtaining module 1031 in the foregoing embodiment. For details, refer to related descriptions in the foregoing embodiment. Details are not described herein again. Similarly, for specific functions executed by the segmentation module 602 and the annotation module 603 in this embodiment, refer to the segmentation module 1032 and the annotation module 1033 in the foregoing embodiment.

In a possible implementation, the segmentation module 602 is specifically configured to:
recognize target voice start and end points of the voice content, where the target voice start and end points include a target voice start point and a target voice end point corresponding to the target voice start point; and
obtain the target video clip, based on the target voice start and end points, from the video to be processed.

In a possible implementation, the segmentation module 602 is specifically configured to:
recognize target subtitle start and end points of the subtitle corresponding to the voice content, where the target subtitle start and end points include a target subtitle start point and a target subtitle end point corresponding to the target subtitle start point;
obtain, based on the target subtitle start and end points, a candidate video clip from the video to be processed; and
when the target voice start and end points are inconsistent with the target subtitle start and end points, adjust the candidate video clip based on the target voice start and end points to obtain the target video clip.

In a possible implementation, the segmentation module 602 is specifically configured to determine the target subtitle start and end points based on a subtitle display region of the subtitle.

In a possible implementation, the apparatus 600 further includes:
a video corpus application module 604, configured to complete training of a speech recognition model by using audio and an annotation text in the video corpus; or complete training of a speech generation model by using audio and an annotation text in the video corpus.

In a possible implementation, the annotation text of the video corpus includes a text in a first language and a text in a second language, and the apparatus 600 further includes:
the video corpus application module 604, configured to complete training of a machine translation model by using the text of the first language and the text of the second language.

In a possible implementation, the apparatus 600 further includes:
an information obtaining module 605, configured to obtain facial information in a video image of the video corpus; and
the video corpus application module 604, configured to generate a digital virtual human based on the facial information, the audio included in the video corpus, and the annotation text of the video corpus.

In a possible implementation, the apparatus 600 further includes:
a presentation module 606, configured to present a task configuration interface; and
the information obtaining module 605, configured to obtain a training task that is of a user and that is for the video corpus on the task configuration interface.

The video corpus generation apparatus 600 according to this embodiment of this application may correspondingly perform the methods described in embodiments of this application. The foregoing and other operations and/or functions of the modules of the video corpus generation apparatus 600 are respectively used to implement corresponding procedures of the methods performed by the video corpus generation apparatus 103 in FIG. 2. For brevity, details are not described herein again.

In the foregoing embodiments, a process of generating a video corpus may also be implemented by using a separate hardware device. The following describes in detail a computing device that implements the process of generating a video corpus.

FIG. 7 is a schematic diagram of a structure of a computing device. A computing device 700 shown in FIG. 7 may be specifically configured to implement a function of the video corpus generation apparatus 103 in the embodiment shown in FIG. 2, or a function of the video corpus generation apparatus 600 in the embodiment shown in FIG. 6.

The computing device 700 includes a bus 701, a processor 702, a communication interface 703, and a memory 704. The processor 702, the memory 704, and the communication interface 703 communicate with each other over the bus 701. The bus 701 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 7, but this does not mean that there is only one bus or only one type of bus. The communication interface 703 is configured to communicate with the outside, for example, receive a target service request sent by a software developer to a functional network element.

The processor 702 may be a central processing unit (central processing unit, CPU). The memory 704 may include a volatile memory (volatile memory), for example, a random access memory (random access memory, RAM). The memory 704 may further include a non-volatile memory (non-volatile memory), for example, a read-only memory (read-only memory, ROM), a flash memory, an HDD, or an SSD.

The memory 704 stores executable code, and the processor 702 executes the executable code to perform the method performed by the video corpus generation apparatus 103 or the video corpus generation apparatus 600.

Specifically, when the embodiment shown in FIG. 2 is implemented, software or program code required for performing the function of the video corpus generation apparatus 103 in FIG. 2 is stored in the memory 704. Interaction between the computing device 700 and another device is implemented through the communication interface 703. For example, the computing device 700 obtains a plurality of pieces of data to be processed in a data source through the communication interface 703. The processor is configured to execute instructions in the memory 704, to implement the method performed by the video corpus generation apparatus 600.

In addition, an embodiment of this application further provides a computer-readable storage medium. The computer-readable storage medium stores instructions. When the instructions are run on a computer device, the computer device is enabled to perform the method performed by the video corpus generation apparatus 103 in the foregoing embodiment.

In addition, an embodiment of this application further provides a computer program product. When the computer program product is executed by a computer, the computer performs any one of the foregoing methods for providing data. The computer program product may be a software installation package. When any one of the foregoing methods for providing data needs to be used, the computer program product may be downloaded and executed on the computer.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided in this application, a connection relationship between modules indicates that there is a communication connection between the modules, and may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, software program implementation is a better implementation in more cases. Based on such an understanding, the technical solution of this application essentially or the part that makes contributions to the current technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for indicating a computer device (which may be a personal computer, a training device, or a network device) to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A method for generating a video corpus, wherein the method comprises:
obtaining a video to be processed, wherein the video to be processed corresponds to voice content, and some video images of the video to be processed comprise a subtitle corresponding to the voice content;
obtaining, based on the voice content, a target video clip from the video to be processed; and
using a subtitle comprised in a video image in the target video clip as an annotation text of the target video clip, to obtain a video corpus.

2. The method according to claim 1, wherein the obtaining, based on the voice content, a target video clip from the video to be processed comprises:
recognizing target voice start and end points of the voice content, wherein the target voice start and end points comprise a target voice start point and a target voice end point corresponding to the target voice start point; and
obtaining, based on the target voice start and end points, the target video clip from the video to be processed.

3. The method according to claim 2, wherein the obtaining, based on the target voice start and end points, the target video clip from the video to be processed comprises:
recognizing target subtitle start and end points of the subtitle corresponding to the voice content, wherein the target subtitle start and end points comprise a target subtitle start point and a target subtitle end point corresponding to the target subtitle start point;
obtaining, based on the target subtitle start and end points, a candidate video clip from the video to be processed; and
when the target voice start and end points are inconsistent with the target subtitle start and end points, adjusting the candidate video clip based on the target voice start and end points to obtain the target video clip.

4. The method according to claim 3, wherein the recognizing target subtitle start and end points of the subtitle corresponding to the voice content comprises:
determining the target subtitle start and end points based on a subtitle display region of the subtitle.

5. The method according to any one of claims 1 to 4, wherein the method further comprises:
completing training of a speech recognition model by using audio and an annotation text in the video corpus; or
completing training of a speech generation model by using audio and an annotation text in the video corpus.

6. The method according to any one of claims 1 to 5, wherein the annotation text of the video corpus comprises a text in a first language and a text in a second language, and the method further comprises:
completing training of a machine translation model by using the text of the first language and the text of the second language.

7. The method according to any one of claims 1 to 6, wherein the method further comprises:
obtaining facial information in a video image of the video corpus; and
generating a digital virtual human based on the facial information, the audio comprised in the video corpus, and the annotation text of the video corpus.

8. The method according to any one of claims 1 to 7, wherein the method further comprises:
presenting a task configuration interface; and
obtaining a training task that is of a user and that is for the video corpus on the task configuration interface.

9. An apparatus for generating a video corpus, wherein the apparatus comprises:
a video obtaining module, configured to obtain a video to be processed, wherein the video to be processed corresponds to voice content, and some video images of the video to be processed comprise a subtitle corresponding to the voice content;
a segmentation module, configured to obtain, based on the voice content, a target video clip from the video to be processed; and
an annotation module, configured to use a subtitle comprised in a video image in the target video clip as an annotation text of the target video clip, to obtain a video corpus.

10. The apparatus according to claim 9, wherein the segmentation module is specifically configured to:
recognize target voice start and end points of the voice content, wherein the target voice start and end points comprise a target voice start point and a target voice end point corresponding to the target voice start point; and
obtain, based on the target voice start and end points, the target video clip from the video to be processed.

11. The apparatus according to claim 10, wherein the segmentation module is specifically configured to:
recognize target subtitle start and end points of the subtitle corresponding to the voice content, wherein the target subtitle start and end points comprise a target subtitle start point and a target subtitle end point corresponding to the target subtitle start point;
obtain, based on the target subtitle start and end points, a candidate video clip from the video to be processed; and
when the target voice start and end points are inconsistent with the target subtitle start and end points, adjust the candidate video clip based on the target voice start and end points to obtain the target video clip.

12. The apparatus according to claim 11, wherein the segmentation module is specifically configured to determine the target subtitle start and end points based on a subtitle display region of the subtitle.

13. The apparatus according to any one of claims 9 to 12, wherein the apparatus further comprises:
a video corpus application module, configured to complete training of a speech recognition model by using audio and an annotation text in the video corpus; or complete training of a speech generation model by using audio and an annotation text in the video corpus.

14. The apparatus according to any one of claims 9 to 13, wherein the annotation text of the video corpus comprises a text in a first language and a text in a second language, and the apparatus further comprises:
the video corpus application module, configured to complete training of a machine translation model by using the text of the first language and the text of the second language.

15. The apparatus according to any one of claims 9 to 14, wherein the apparatus further comprises:
an information obtaining module, configured to obtain facial information in a video image of the video corpus; and
the video corpus application module, configured to generate a digital virtual human based on the facial information, the audio comprised in the video corpus, and the annotation text of the video corpus.

16. The apparatus according to any one of claims 9 to 15, wherein the apparatus further comprises:
a presentation module, configured to present a task configuration interface; and
the information obtaining module, configured to obtain a training task that is of a user and that is for the video corpus on the task configuration interface.

17. A computer device, wherein the computer device comprises a processor and a memory, wherein
the processor is configured to execute instructions stored in the memory, so that the computer device performs the method according to any one of claims 1 to 8.

18. A computer-readable storage medium, wherein the computer-readable storage medium stores instructions, and when the instructions are run on a computing device, the computing device is enabled to perform the method according to any one of claims 1 to 8.

19. A computer program product comprising instructions, wherein when the computer program product is run on a computing device, the computing device is enabled to perform the method according to any one of claims 1 to 8.
